# EUROPEAN PATENT APPLICATION

(11) **EP 4 513 704 A1**
(43) Date of publication of application: **26.02.2025**
(21) Application number: 23193494.4
(22) Date of filing: 25.08.2023
(51) Int. Cl.: H02J 3/36

(54) **A SUBSEA POWER COLLECTION SYSTEM INCLUDING A DISTRIBUTED TRANSFORMER ARRANGEMENT**

(71) Applicant: ABB SCHWEIZ AG, 5400 Baden (CH)
(72) Inventor: INGEBRIGTSEN, Stian, 5252 Bergen (NO); MARTINSEN, Oistein, 1353 Bærums Verk (NO); FRETHEIM, Harald, 1930 Aurskog (NO); MORITSUGU, Vitor, 5254 Bergen (NO)
(74) Representative: Kransell & Wennborg KB

(57) **Abstract**

A power collection system (100) for collecting power from a plurality of offshore power generation units comprises a three-phase subgrid (120) and a subsea power substation (130). The subgrid has a plurality of power input points (121) towards the power generation units and a shared three-phase power output point (122). The power substation (130) is connected to the power output point, and its secondary side (132) is arranged to be connected to a power consumer (170). The power substation shall comprise three one-phase transformers (140), which are contained in respective housings (143), wherein each housing is arranged to rest on the seabed and to be liftable to the sea surface separately from the other housings. Each phase of the power output point is connected to a primary side (141) of a corresponding one of the one-phase transformers.

## Description

### TECHNICAL FIELD

The present disclosure relates to the field of offshore power generation. In particular, it proposes a power collection system which thanks to a distributed transformer arrangement can be given an increased output power rating.

### BACKGROUND

The offshore wind power generation market is on the rise. The worldwide wind power capacity is expected to increase by about 12 GW per year, reaching a total of 150 GW installed power by 2027. Much of the ongoing research efforts are directed at upscaling, including higher power ratings and larger installations. On the one hand, the wind turbines are getting larger, with typical unit sizes being expected to reach the range of 15-20 MW. On the other hand, a shift from fixed-support wind turbines to floating wind turbines is about to take off. Floating installations seem to be best suited for realizing large-scale offshore wind parks, indeed, since they are less dependent on the availability of a favorable seabed topography and can be localized further from the shoreline where the richest wind resources are.

A power collection system refers to the cabling and components responsible for collecting the electric power generated by a park of floating wind turbines and for making it suitable for transmission and/or later use by a power consumer. For example, a number of electric power contributions collected at an intermediate voltage (e.g., 66 kV) may be combined and up-transformed (e.g., to 245 kV), and then conveyed to an onshore grid through a transmission cable. The power collection system may be a subsea system (i.e., which rests on the seabed) or a floating power collection system. Subsea power collection systems are easier to maintain as they operate in more stable environmental conditions, and they only exceptionally need to be connected by dynamic transmission cables. Early results suggest that this category of power collection systems is more robust and incurs a more limited capital expenditure than floating ones.

For maintenance and repairs on a subsea power collection system, the practically more convenient option - which is sometimes the only available option - is to lift relevant ones of the system unit to the surface and perform the work there. Maintenance and repairs on lifted system units are termed topside works. The need to be able to lift the units of the power collection system implies an inherent weight limitation, such as approximately 300 t (metric ton) per unit.

In all subsea power technology, the electric components must of course be protected from leaking seawater. This is possible to achieve by known techniques, including oil-filling and specialized sealing arrangements, which however incur significant cost if the volume and/or physical extent of the subsea units grows large. This desire to minimize the physical size is not always easy to combine with efficient cooling, where the surface-volume ratio is crucial. A view generally held at the time of the present disclosure is that the design of subsea transformers beyond an approximate power rating of 200 MVA power rating involves significant challenges.

One problem is thus to propose technology that enables the further upscaling of subsea power collection systems.

### SUMMARY

It is an objective of the present disclosure to make available a subsea power collection system that can be manufactured and/or maintained by conventional subsea technology while being adapted for an output power of more than 200 MVA. It is a further objective to make available a subsea power collection system which these characteristics with an output power of 400 MVA or more, such as 600 MVA, and possibly up to 900 MVA. A further objective is to make available a subsea power collection system where each unit has a simple constitution, e.g., it comprises a limited number of components. A further objective is to make available a subsea power collection system where all units in need of maintenance and repairs are liftable to the surface, i.e., they are accessible for topside works. A further objective is to make available a single-output (single three-phase output) subsea power collection system with these characteristics.

At least some of these objectives are achieved by the invention as defined by claim 1. The dependent claims relate to advantageous embodiments.

More precisely, a power collection system for collecting power from a plurality of offshore power generation units is proposed. The power collection system comprises a three-phase subgrid and a subsea power substation. The subgrid has a plurality of power input points towards the power generation units and a three-phase power output point, which is shared by the power input points. (The power output point of the subgrid may correspond to a connector, interface or another physical feature of the subgrid, or it may be an entirely conceptual point on a cable in the subgrid.) The power substation is connected to the power output point, wherein a secondary side of the power substation is arranged to be connected to a power consumer. According to the present disclosure, the power substation comprises three one-phase transformers, which are contained in respective housings, wherein each housing is arranged to rest on the seabed and to be liftable to the sea surface separately from the other housings (i.e., after disconnecting any cables to the other housings if necessary), and each phase of the power output point is connected to a primary side of a corresponding one of the one-phase transformers.

By deploying three one-phase subsea transformers in separate housings, rather than a single three-phase subsea transformer, the weight and size problem is overcome, and further upscaling becomes possible. More precisely, each one-phase transformer can be designed with a weight in the weight range that is liftable using conventional offshore technology, and with a power rating that does not require specialized cooling arrangements. Further, thanks to the relatively simpler constitution of the one-phase transformers, the lower total lifecycle cost of three one-phase transformers need not exceed that of a monolithic three-phase transformer with an equal power rating. These advantages are not achieved at the expense of the power-consumer side (downstream side), as would be the case if the power collection system was upscaled by the use of multiple parallel three-phase transformers, requiring one transmission cable each; instead, all of the output power of the power collection system can be consumed at a single three-phase connection point, namely, the secondary side of the power substation.

In some embodiments, arrays of wind turbines are arranged sequentially on respective three-phase cables (array cables) in the subgrid, which lead up to the three one-phase transformers. Identical phases from different array cables are connected inside the respective subsea transformer. This advantageously avoids the ampacity limitations for subsea wet-mate connectors.

In some embodiments, the transformer windings of the three one-phase transformers - when considered together - are star-connected on the primary side and delta-connected on the secondary side. For the delta windings, power jumpers across the three transformers may optionally be provided. By alternative terminology, a star connection may be referred to as a Y ('wye') connection.

In some embodiments, the transformer windings are star-connected on the primary side and star-connected on the secondary side. Optionally, an unloaded delta-connected tertiary winding may be arranged to suppress high-order harmonics.

In the present disclosure, the term "power consumer" is used in an abstract (or black-box) sense and from the perspective of the subsea power substation. Accordingly, it covers not only devices which themselves dissipate electric power, but also devices that convert electric power, including a transmission cable (or export cable), an onshore substation, an offshore or onshore energy storage device, an offshore or onshore hydrogen converter, and the like.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 shows a power collection system arranged between a number of offshore power generation units and a power consumer;
figure 2 shows a detail of a power collection system and a number of connected offshore power generation units;
figure 3 illustrates a first placement of optional switches between the one-phase transformers and the three-phase subgrid of the power collection system;
figure 4 illustrates a second placement of optional switches between the one-phase transformers and the three-phase subgrid of the power collection system;
figure 5 shows serially connected subsea power extender modules, through which the offshore power generation units can be connected to the subgrid;
figure 6A illustrates a placement of an optional switch before the power output point of a three-phase subgrid where the power generation units are connected via power extender modules;
figure 6B shows an alternative embodiment of a power extender module;
figure 7 shows an embodiment where the windings of the one-phase transformers are star-connected on the primary side and star-connected on the secondary side;
figure 8 shows an embodiment where the windings of the one-phase transformers are delta-connected on the primary side and star-connected on the secondary side; and figure 9 is a simplified perspective view of a subsea power collection system arranged between a number of floating wind turbines and a transmission cable.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

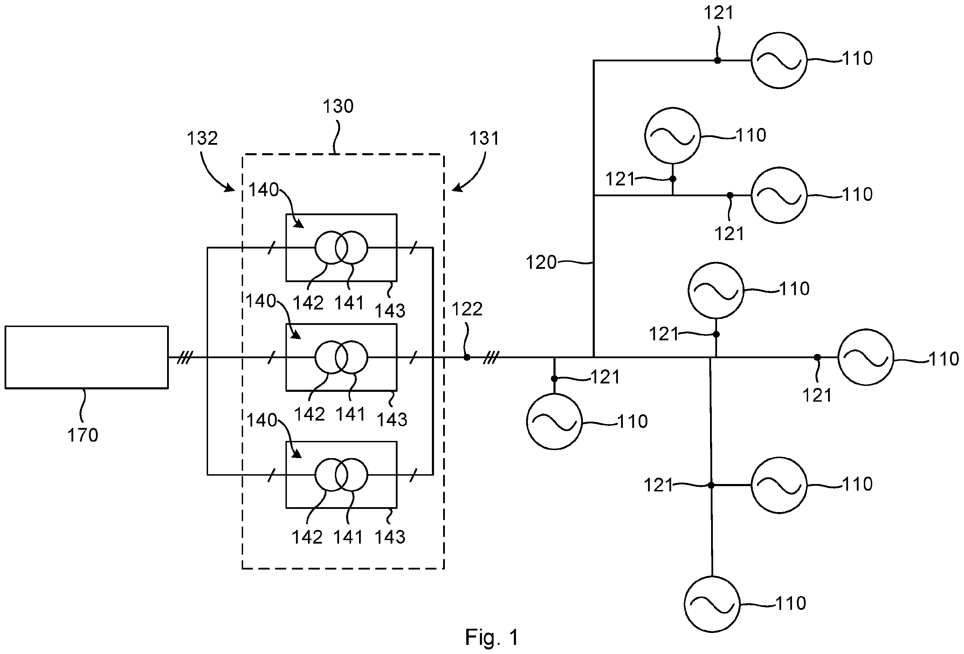

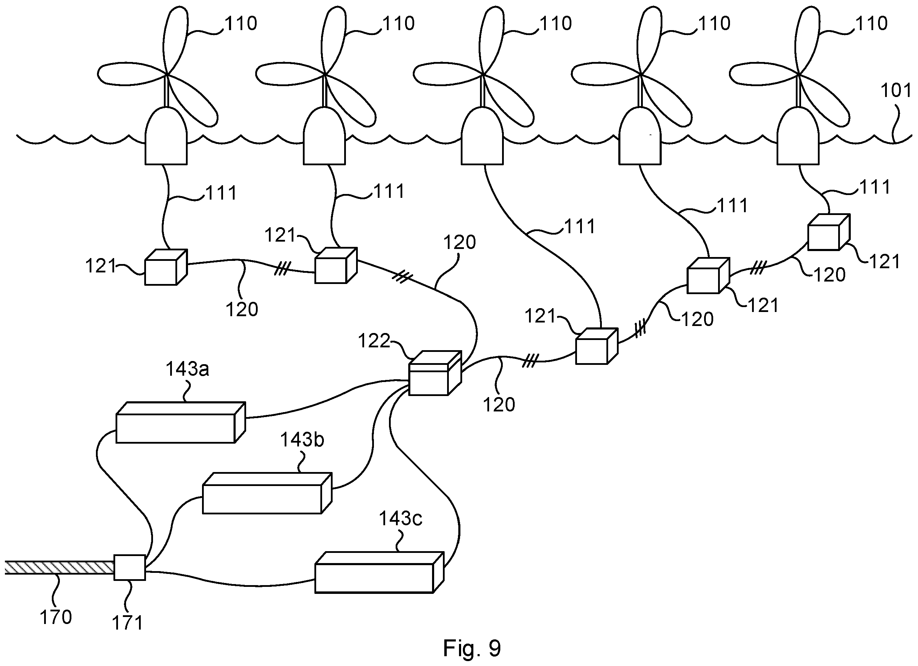

Figure 1 is a schematic drawing of a power collection system 100 arranged between a number of offshore power generation units 110 and a power consumer 170. A similar power collection system 100 is depicted in figure 9.

The power collection system 100 comprises a three-phase subgrid 120 with a plurality of power input points 121 towards the power generation units 110 and a three-phase power output point 122. The offshore power generation units 110 may include floating or fixed-support devices, such as one or more (floating) wind turbines, (floating) solar cell arrangements, (floating) wave energy converters, or combinations of one or more of these. Fixed-support devices may alternatively be described as bottom-fixed devices. The power generation units 110 may be configured to generate three-phase electric power, such that each is connected to all three phases of the subgrid 120. Alternatively, the power generation units 110 may be configured to generate one-phase electric power, wherein three subgroups of the power generation units 110 may be connected to the three phases in an approximately balanced way. Under the first option, the power input points 121 are three-phase power input points. The power generation units 110 may include units with a rated output power of the order of 1 MW or more, such as output power in the range of 15-20 MW or more. The power generation units 110 may be of a uniform type with equal power ratings, or they may have different power ratings. In the case of large-scale floating wind turbines, the mutual spacing of the power generation units 110 may be of the order of 1 km, such as 2 km or more.

The power output point 122 is shared by the power input points 121 in the sense that a combined current representing all electric power fed into the power input points 121 is available by establishing a connection at the power output point 122 and/or in the sense that a device connected to the power output point 122 has no way of selecting a certain power input point 121 and receive electric power only from this. It is noted that the power input points 121 and power output point 122 may correspond to a physical component or another structural feature of the subgrid 120, but that such correspondence is not necessarily present. Rather, one or more of the power input points 121 and power output point 122 may be purely conceptual. In figure 1, for example, it makes no technical difference whether the "power output point" is identified at reference number 122 or at another location between the four-way branching point to the left and the three-way branching point to the right. As shown in figure 1, further, a power input point 121 may be constituted by a connection point which is common to two or more power generation units 110.

The power collection system 100 further comprises a subsea power substation 130, which includes three one-phase transformers 140. Each one-phase transformer 140 is contained in a respective housing 143 (or tank), which is arranged to rest on the seabed 102 (see figure 9) and with such constitution that the housing 143 with the transformer 140 inside can be lifted to the sea surface 101 (see figure 9) separately from the other housings. The ability for each housing 143 to be separately liftable implies that the three housings 140 are not permanently joined to form a rigid unit. In such embodiments where pairs of the housings 140 are joined by mechanical wires, electric connections and other movable joining elements, these joining elements should either be long enough to allow the two housings 140 to be separated by a sufficient distance for lifting (i.e., at least the sea depth at the location of deployment), or the joining elements should be releasable non-destructively. Similarly, if the housings 140 are joined by a locking arrangement, the locking arrangement can be released non-destructively. The weight of a housing 140 with a one-phase transformer 140 inside is preferably less than 300 t, such as less than 200 t, such as less than 100 t.

Preferably, the housings 143 are designed to be watertight in seabed conditions, i.e., they are equipped with seals that withstand the hydrostatic pressure at the level of the seabed, and they are manufactured from materials suitable for long-term use in seawater. A representative depth may be 100 m or more, such as 200 m or more, such as 300 m or more, such as 500 m or more, such as 1000 m or more. The housings 143 may be specified for operation at a maximum depth of the order of 1500 m.

Each of the transformers 140 has a primary side 141 corresponding to a primary winding, and a secondary side 142 corresponding to a secondary winding. In steady-state operation, net power generally flows from the primary side 141 to the secondary side winding 142. The orientation of the primary sides 141 and secondary sides 142 of the transformers 140 defines a primary side 131 and a secondary side 132 of the power substation 130. The primary side 131 of the power substation 130 interfaces with the power output point 122 of the subgrid 120, and the secondary side 132 is to be connected to the power consumer 170.

Each of the one-phase transformers 140 may be configured for a secondary voltage of 200 kV or more, such as 245 kV. The primary voltage, equal to the phase voltage of the subgrid 120, may for example be 60 kV or 66 kV. The power rating of the power collection system 100, which corresponds to the combined power rating of the transformers 140, may be 400 MVA or more, such as 600 MVA, and possibly up to 900 MVA.

As mentioned, the unit designated as a power consumer 170 acts as a consumer from the perspective of the subsea power substation 130. This is to say, the power consumer 170 may perform energy conversion itself or may facilitate energy conversion in an entity further downstream. Accordingly, the power consumer 170 may for example be a static or dynamic transmission cable (or export cable), an onshore power substation, an offshore or onshore energy storage device (e.g., battery), an offshore or onshore hydrogen converter, and the like. The power consumer 170 is configured to be supplied with three-phase electric power. In some embodiments, the outputs of the three secondary windings 142 are directly connected to the power consumer 170. Alternatively, the outputs of the three secondary windings 142 are joined into a three-phase interface - e.g., by mechanically joining three one-phase cables into a three-phase cable or connector - and then connected to the power consumer 170.

As figure 9 illustrates, a subsea power collection system 100 of the type under consideration may comprise a plurality of floating power generation units 110 (shown as floating wind turbines in figure 9) at approximate sea level 101, and a number of subsea components which rest on the seabed or are at least partially submerged. In the illustrated power collection system 100, the cables making up the subgrid 120 are for the most part static sea cables suitable for resting on the seabed. Each of the floating wind turbines 110 is connected to the subgrid 120 via a dynamic sea cable 111 followed by a power input point 121, which is here constituted by a connection box (or interface) between the dynamic sea cable 111 and a static sea cable in the subgrid 120. In line with ordinary terminology in this technical field, a dynamic sea cable is a cable designed for repeated deformations and/or mechanical loading and unloading. Generally, dynamic sea cables differ from equivalent static sea cable by having a better resistance to material fatigue caused by deformation. The power output point 122, for its part, may be constituted by a connection box which has two incoming subgrid cables from the subgrid 120, as well as three outgoing phases which continue into housings 143a, 143b, 143c that contain respective one-phase transformers (not shown) within the power substation 130. The outputs of the transformer, which constitute the output phases of the power substation 130, leave the housings 143a, 143b, 143c and are joined at a connection box 171 into a three-phase transmission cable (or export cable) 170. The connection boxes 121, 122, 171, the housings 143a, 143b, 143c and the cables of the subgrid 120 are all arranged to rest on the seabed. This may include suitable technical measures for achieving chemical compatibility with seawater and/or watertightness. However, because the seabed environment is a relatively stable one, the seabed-located units of the power collection system 100 do not necessarily possess a verified resistance to repeated movements during the lifecycle, as is normally required from floating generators that are exposed to waves, dynamic cables that deform to follow the sea heave, etc.

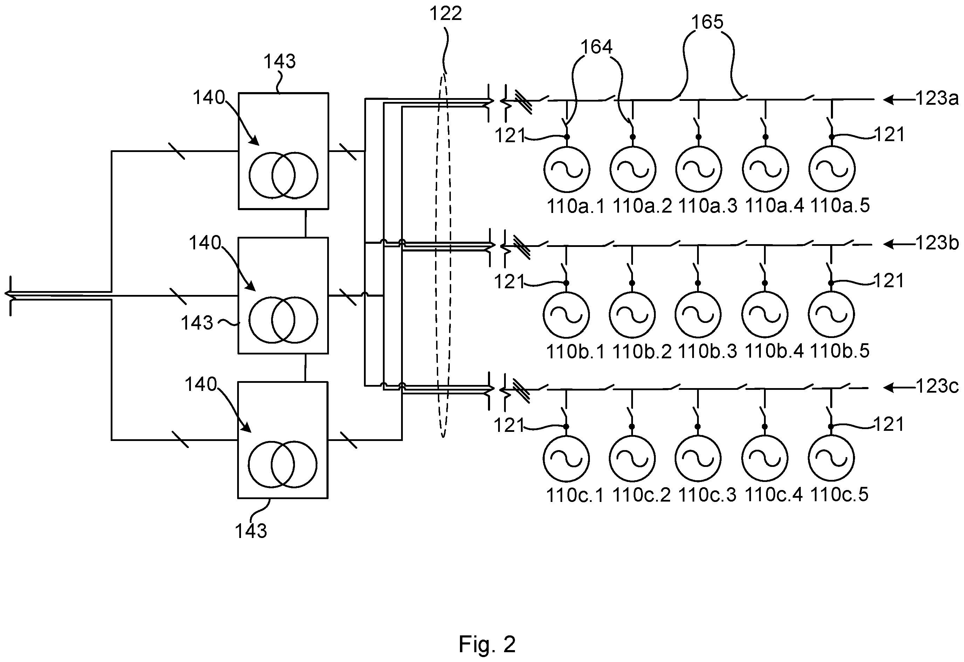

Figure 2 shows a detail of a power collection system 100 and a number of connected offshore power generation units 110. In some embodiments, the subgrid 120 is structured around *N* array cables 123a, 123b, 123c, which extend radially from the power output point 122, wherein the power input points 121 are arranged along the array cables 123. Figure 2 shows such a power collection system 100 where power generation units 110a.1, 110a.2, ..., 110a.5, are connected to power input points 121 along a first array cable 123a, power generation units 110b.1, 110b.2, ..., 110b.5 are connected to power input points 121 along a second array cable 123b, and power generation units 110c.1, 110c.2, ...,110c.5 are connected to power input points 121 along a third array cable 123c. The array cables 123 in figure 2 have equal numbers of connected power generation units 110 but they could also have different numbers of connected power generation units 110. The subgrid comprises a plurality of branch switches 164 allowing individual power generation unit 110 to be disconnected from the respective array cable 123. The subgrid further comprises a plurality of trunk switches 165 allowing the outer portion of the respective array cable 123 to be disconnected from the subgrid. It is not necessary to provide a trunk switch 165 outside the outermost power input point 121, although this may occur as a result of implementing the power collection system 100 as a combination of pre-designed building blocks.

Although the subgrid in figure 2 has *N* = 3 array cables 123, each of these is a three-phase cable, and they are not in a one-to-one relationship with the three one-phase transformers 140. Between the power output point 122 and each array cable 123, each phase is split from the other phases of that array cable 123 so as to be joined with identical phases from the *N* - 1 other array cables and directed to a corresponding one of the one-phase transformers 140. In an alternative implementation, the joined *N* identical phases from the array cables are connected (electrically connected) at a point inside the housing 143 that contains the corresponding one of the one-phase transformers 140. The connection point inside the housing 143 may be a busbar, and a conventional 200 MVA transformer would have sufficient space to accommodate multiple high-voltage power feedthroughs. Thanks to the fact that the joined *N* identical phases from the array cables 123 are connected inside the housing 143, away from the seawater, the ampacity limitations for subsea wet-mate connectors can be circumvented.

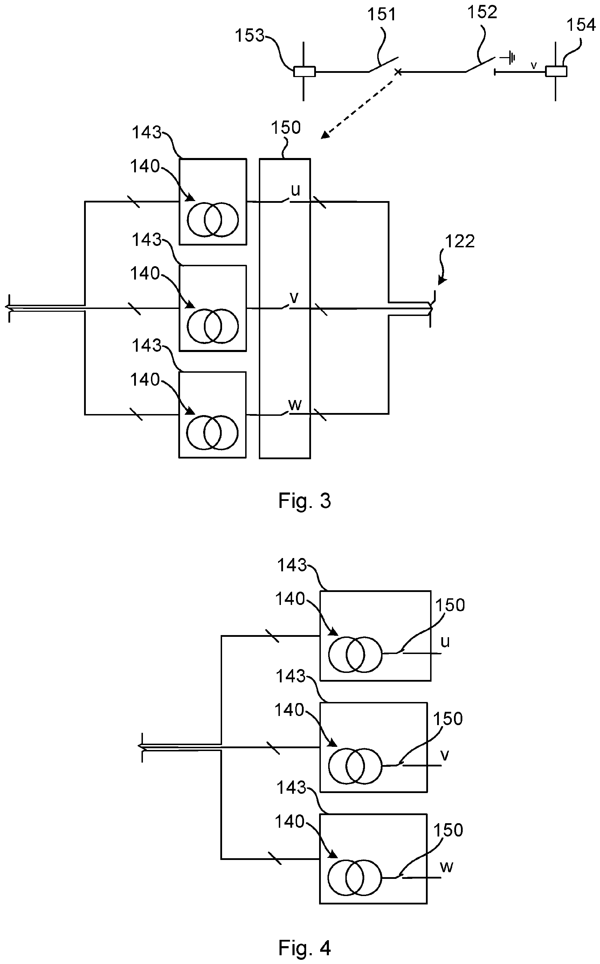

Figures 3 and 4 illustrates possible placements of switches 150 between the one-phase transformers and the three-phase subgrid of the power collection system. The switches 150, which may be used for isolating faults, are arranged between the primary side 141 of each one-phase transformer 140 and the power output point 122. In other words, the switches 150 are arranged on the inputs to the one-phase transformers 140, corresponding to respective phases u, v, w of the subsea power station 130. In the embodiment in figure 3, the switches are implemented as a dedicated switch unit 150 separate from the housings 143. In figure 4, the switches 150 are arranged inside the respective housings 143.

A possible schematic of a one-phase switch 150 for this purpose is suggested at the top right corner of figure 3. The one-phase switch is composed of two sub-switches 151, 152 which are arranged between two feedthroughs 153, 154 allowing the input to the one-phase transformer 140 to enter and leave the housing of the switch unit 150. The second sub-switch 152 can be set in a ground position or a closed position. In normal operation, both sub-switches 151, 152 are closed. When one or both sub-switches 151, 152 are open, the corresponding one-phase transformer 140 is disconnected from the subgrid, and the one-phase transformer 140 is optionally grounded.

A simpler implementation of the one-phase switch 150 may include a single sub-switch.

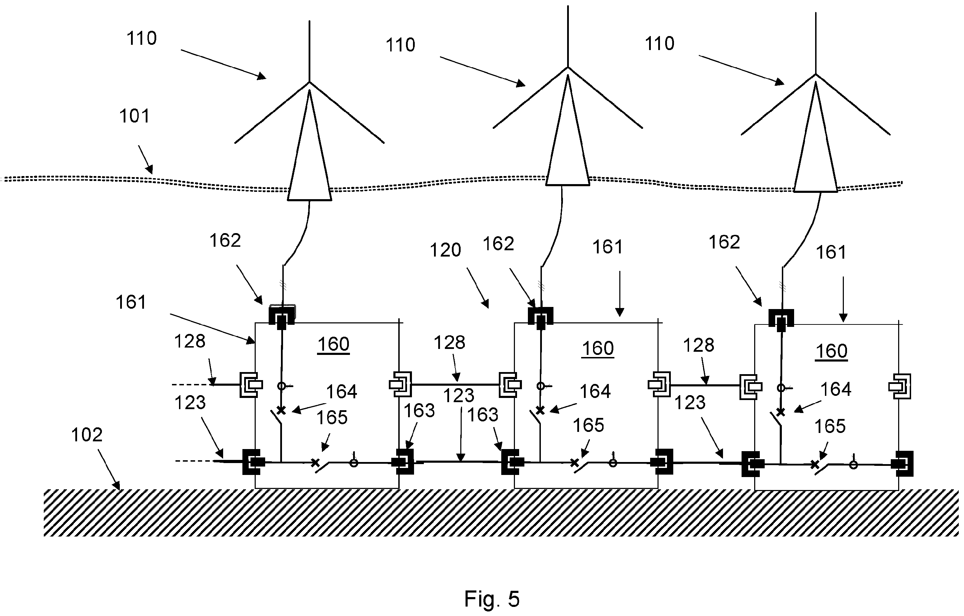

Figure 5 shows a detail of a power collection system 100 in which serially connected subsea power extender modules 160 are used for connecting the offshore power generation units 110 to an array cable 123 of the subgrid 120. The power extender modules 160 can be understood as a modular way of providing the branch switches 164 and trunk switches 165 introduced above with reference to figure 2. In one embodiment, a power extender module 160 comprises a switchable input terminal 162 arranged to be connected to a power generation unit 110, and at least two interconnection terminals 163, suitable for connecting the power extender module 160 in series to adjacent power extender modules. The power extender module 160 may further comprise a connection to a data network 128, on which it may exchange protection and control related information with other components of the power collection system 100. The data network 128 maybe a digital packet-switched network, such as an ethernet network. The power extender module 160 is arranged to rest on the seabed 102 and therefore has a housing 161 designed to be watertight in seabed conditions.

In the applicant's earlier disclosure EP4063646A1, several implementations of the power extender module 160 are described that are suitable for use with the teachings herein.

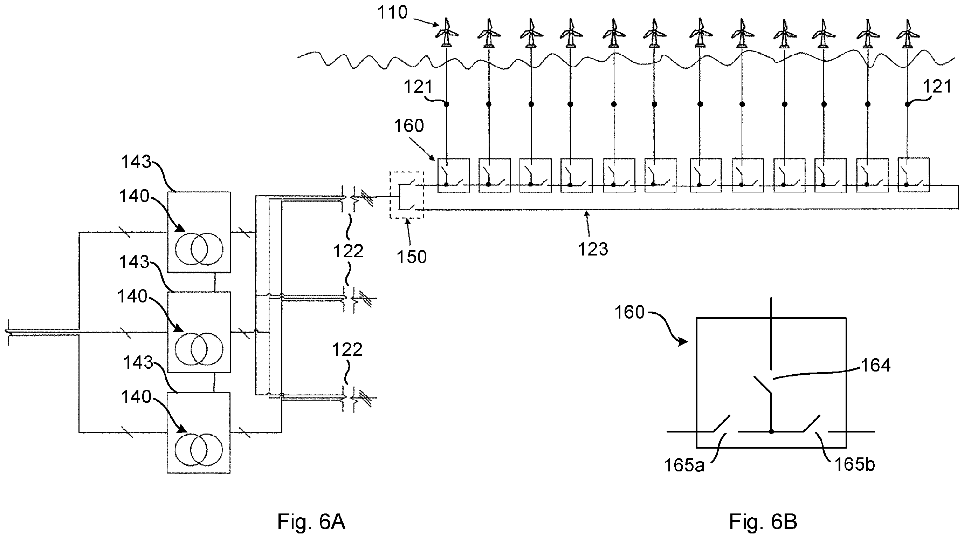

The power extender module's 160 input terminal 162 connected to the power generation unit 110 is switchable by means of switching circuitry constituting a branch switch 164, whereby the power generation unit 110 can be decoupled as desired. In some embodiments including the one shown in figure 5, the interconnection terminal 163 is switchable too, namely, by means of switching circuitry constituting a trunk switch 165, which allows it to decouple an adjacent power extender module. In the alternative configuration shown in figure 6B, the power extender module 160 includes two trunk switches 165a, 165b, one on each side of the branch switch 164. The availability of two trunk switches 165a, 165b which are switchable independently of one another allows fault isolation with an even finer granularity.

Figure 6A shows a way of arranging the power extender modules 160 serially on an array cable 123 of the subgrid. The array cable has a ring topology, so that each power generation unit 110 sits on a loop that has two paths to the power output point 122, which allows many options for fault isolation. In the embodiment of figure 6A, the subgrid further comprises switches 150 between the power output point 122 and each array cable 123. More precisely, there is an independent switch 150 between each end of the loop-shaped array cable 123 and the power output point 122. It is noted that figure 6A contains multiple instances of reference number 122, which refer to galvanically connected points of the power collection system 110 which can collectively be identified as the power output point of the subgrid.

As mentioned, figure 6B shows an alternative configuration of the power extender module 160, which can replace one or more of the power extender modules 160 seen in figure 6A.

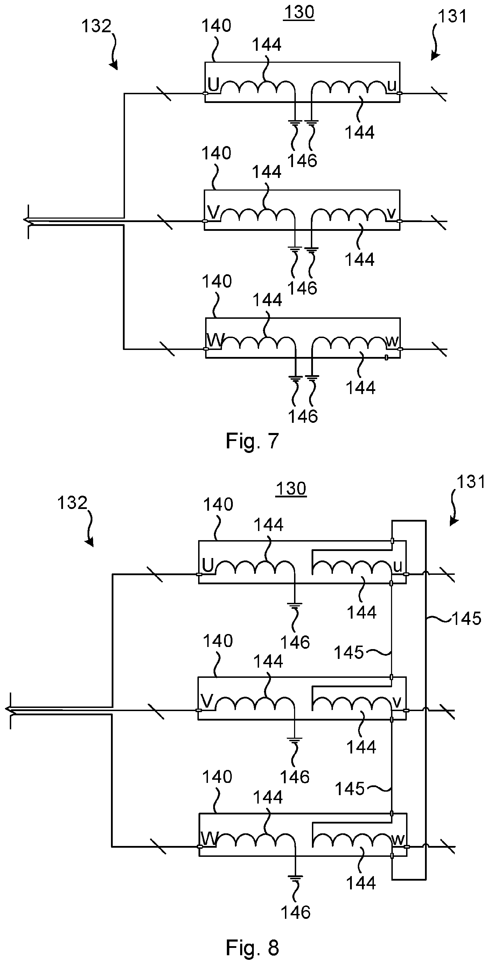

Figure 7 shows an embodiment of the subsea power substation 130 where the windings 144 of the one-phase transformers 140 are star-connected on the primary side 131 and star-connected on the secondary side 132. It is understood that the two windings 144 inside each of the three housings 140 are magnetically coupled. This embodiment is relatively simple and inexpensive to manufacture and install. Neutral points 146 on both the primary and secondary side can be solidly grounded inside the housing 143. To attenuate third- and higher-order harmonics, an unloaded delta-connected tertiary winding can be added to the circuit shown in figure 7.

Figure 8 shows an embodiment where the windings 144 of the one-phase transformers are delta-connected on the primary side and star-connected on the secondary side. To complete the delta connections, there are provided power jumpers 145, each of which is an electric connection provided between pairs of the one-phase transformers 140. At least one segment of each power jumper 145 is provided as a sea cable. In some embodiments, each power jumper 145 is permanently connected to one one-phase transformer 140 and arranged to be connected to a further one-phase transformer 140 when the two transformers 140 have been deployed (pigtail configuration). Preferably, to allow separate lifting of the transformers 140 for maintenance and repairs, the connection to the further one-phase transformer 140 is releasable, i.e., it can be undone non-destructively. For high current installations, each pair of one-phase transformers 140 may be connected by multiple power jumpers 145 in parallel.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A power collection system (100) for collecting power from a plurality of offshore power generation units (110), the power collection system comprising:
a three-phase subgrid (120) with a plurality of power input points (121) towards the power generation units and a three-phase power output point (122), which is shared by the power input points; and
a subsea power substation (130) connected to the power output point, wherein a secondary side (132) of the power substation is arranged to be connected to a power consumer (170),
**characterized in that** the power substation comprises three one-phase transformers (140) contained in respective housings (143), each of which is arranged to rest on the seabed (102) and to be liftable to the sea surface (101) separately from the other housings, and
**in that** each phase of the power output point is connected to a primary side (141) of a corresponding one of the one-phase transformers.

2. The power collection system (100) of claim 1, wherein:
the subgrid (120) further comprises *N* ≥ 2 three-phase array cables (123), which extend radially from the power output point (122), and along which the power input points (121) are arranged serially;
between the power output point and each array cable, each phase is split from the other phases of that array cable so as to be joined with identical phases from the *N* - 1 other array cables; and
the joined *N* identical phases from the array cables are connected at a point inside the housing (143) that contains the corresponding one of the one-phase transformers (140).

3. The power collection system (100) of claim 1 or 2, further comprising a switch (150) between the power output point (122) and each array cable (123) of the subgrid (120).

4. The power collection system (100) of any of the preceding claims, further comprising a switch (150) between the primary side (141) of each one-phase transformer (140) and the power output point (122).

5. The power collection system (100) of any of the preceding claims, wherein the one-phase transformers (140) comprise magnetically coupled windings (144) which are delta-connected on a primary side (131) of the power substation (130) and star-connected on a secondary side (132) of the power substation.

6. The power collection system (100) of claim 5, further comprising power jumpers (145), which are provided between pairs of the one-phase transformers (140) to establish said delta connection of their windings (144).

7. The power collection system (100) of claim 6, wherein each power jumper (145) is permanently connected to one one-phase transformer (140) and arranged to be connected to a further one-phase transformer at deployment.

8. The power collection system (100) of any of claims 1 to 4, wherein the one-phase transformers (140) comprise magnetically coupled windings (144) which are star-connected on a primary side (131) of the power substation (130) and star-connected on a secondary side (132) of the power substation.

9. The power collection system (100) of claim 8, wherein at least one of the one-phase transformers (140) further comprises an unloaded delta-connected tertiary winding configured to attenuate harmonics.

10. The power collection system (100) of any of claims 5 to 9, wherein the star-connected windings are grounded inside the housings (143) at a neutral point (146).

11. The power collection system (100) of any of the preceding claims, further comprising subsea power extender modules (160), each comprising a switchable input terminal (162) arranged to be connected to a power generation unit, and at least two interconnection terminals (163), suitable for connecting the power extender module in series to adjacent power extender modules.

12. The power collection system of claim 11, wherein at least one power extender module (160) comprises a switchable interconnection terminal (163) allowing it to decouple an adjacent power extender module,
wherein the power extender module preferably comprises an interconnection terminal that is switchable independently of other interconnection terminals on that power extender module.

13. The power collection system (100) of any of the preceding claims, wherein the power input points (121) are three-phase power input points.

14. The power collection system (100) of any of the preceding claims, wherein the housings (143) of the one-phase transformers (140) are designed to be watertight in seabed conditions.

15. The power collection system (100) of any of the preceding claims, wherein the power consumer (170) is a three-phase power consumer connected to a secondary side (142) of each of the three one-phase transformers (140).

16. The power collection system (100) of any of the preceding claims, wherein power substation (130) is configured for a secondary phase voltage of at least 200 kV.

17. The power collection system (100) of any of the preceding claims, which is configured for an output power of at least 400 MVA.

18. The power collection system (100) of any of the preceding claims, wherein the offshore power generation units (110) include at least one floating wind turbine, at least one floating solar cell arrangement and/or at least one floating wave energy converter.
